# EUROPEAN PATENT APPLICATION

(11) **EP 3 981 614 A1**
(43) Date of publication of application: **13.04.2022**
(21) Application number: 20818447.3
(22) Date of filing: 26.02.2020
(51) Int. Cl.: B60C 9/00

(54) **CORD AND TIRE**

(30) Priority: 05.06.2019 JP 2019105409; 05.06.2019 JP 2019105410; 05.06.2019 JP 2019105411
(71) Applicant: Sumitomo Rubber Industries, Ltd., Kobe-shi, Hyogo 651-0072 (JP)
(72) Inventor: INOUE, Manabu, Kobe-shi, Hyogo 651-0072 (JP); KAJITA, Hisataka, Kobe-shi, Hyogo 651-0072 (JP); KAGEYUKI, Ikuo, Kobe-shi, Hyogo 651-0072 (JP)
(74) Representative: TBK
(86) International application number: PCT/JP2020/007810
(87) International publication number: WO 2020/246083

(57) **Abstract**

The present disclosure provides a cord excellent in fatigue resistance, breaking strength, and conductivity, and a tire including the cord. The present disclosure relates to a cord including at least one polymer A selected from the group consisting of an aniline-based conductive polymer, a thiophene-based conductive polymer, polyacetylene, poly(p-phenylene), and poly(p-phenylene vinylene).

## Description

### TECHNICAL FIELD

The present disclosure relates to a cord and a tire including the cord.

### BACKGROUND ART

In recent years, pneumatic tires have been known which include RFID chips each having a sensor portion for detecting the physical quantities of the tire such as internal pressure, temperature, and rotation number, and a memory portion for recording the unique identification information of the tire such as manufacturing date (see, for example, Patent Literature 1). However, when such tires are greatly deformed, e.g., during rim assembly or upon running on bumps, for example, joints between the RFID chips and antennas may be damaged to disable communication, leading to a problem that information recorded in the RFID chips cannot be read.

### CITATION LIST

### PATENT LITERATURE

Patent Literature 1: JP 2007-176403 A

### SUMMARY OF DISCLOSURE

### TECHNICAL PROBLEM

The present disclosure aims to solve the problem and provide a cord excellent in fatigue resistance, breaking strength, and conductivity, as well as a tire including the cord.

### SOLUTION TO PROBLEM

The present disclosure relates to a cord, containing at least one polymer A selected from the group consisting of an aniline-based conductive polymer, a thiophene-based conductive polymer, a polyacetylene, poly(p-phenylene), and poly(p-phenylene vinylene).

Preferably, the cord contains a blend fiber of the polymer A and another polymer B.

Preferably, the another polymer B is a hydroxy group-containing polymer.

Preferably, the aniline-based conductive polymer is polyaniline, the thiophene-based conductive polymer is poly(3,4-ethylenedioxythiophene), and the hydroxy group-containing polymer is polyvinyl alcohol.

Preferably, the cord is a hybrid cord containing the polymer A and at least one polymer C selected from the group consisting of an aliphatic polyamide, an aromatic polyamide, a polyester, and a rayon.

The present disclosure also relates to a tire, including the cord containing at least one polymer A.

Preferably, the cord is used as a carcass cord in the tire.

Preferably, the tire includes an RFID tag.

### ADVANTAGEOUS EFFECTS OF DISCLOSURE

The cord of the present disclosure contains at least one polymer A selected from the group consisting of an aniline-based conductive polymer, a thiophene-based conductive polymer, polyacetylene, poly(p-phenylene), and poly(p-phenylene vinylene). Accordingly, the present disclosure provides a cord excellent in fatigue resistance, breaking strength, and conductivity, as well as a tire including the cord.

### BRIEF DESCRIPTION OF DRAWINGS

Fig. 1 is a cross-sectional view illustrating a pneumatic tire according to an embodiment of the present disclosure.
Fig. 2(a) is a schematic diagram illustrating an embodiment of a cord structure, Fig. 2(b) is an enlarged cross-sectional view of the cord in Fig. 2(a), and Fig. 2(c) is an enlarged view illustrating each filament in Fig. 2(b).
Fig. 3(a) is a schematic diagram illustrating an embodiment of a cord structure, Fig. 3(b) is an enlarged cross-sectional view of the cord in Fig. 3(a), and Fig. 3(c) is an enlarged view illustrating each filament in Fig. 3(b).

### DESCRIPTION OF EMBODIMENTS

The cord of the present disclosure contains at least one polymer A selected from the group consisting of an aniline-based conductive polymer, a thiophene-based conductive polymer, polyacetylene, poly(p-phenylene), and poly(p-phenylene vinylene). By including such a cord, it is possible to provide a cord excellent in fatigue resistance, breaking strength, and conductivity, as well as a tire including the cord. Moreover, when such a tire is equipped with an electronic device such as an RFID tag, the transmission and reception accuracy and stability can be improved and the communication distance can also be extended.

The cord is suitable for use as a tire cord, for example. Examples of cords provided in tires include various tire ply cords such as carcass cords and breaker cords. Among these, the cord is particularly suitable for use as a carcass cord.

Hereinbelow, an embodiment in which the cord of the present disclosure is used in a tire is described with reference to drawings.

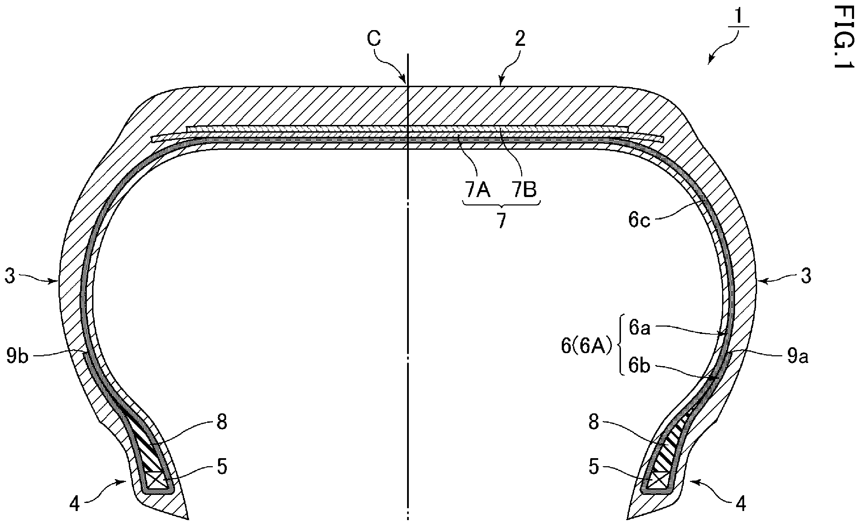

Fig. 1 is a tire meridional cross-sectional view including a tire rotation axis of a tire (hereinafter, also referred to as "pneumatic tire") 1 of the present embodiment in a normal state. The tire 1 of the present embodiment is suitable for use in passenger vehicles, for example.

The term "normal state" refers to a state where the tire 1 is assembled with a normal rim (not illustrated) and inflated to a normal internal pressure under no load. Hereinbelow, the dimensions and other characteristics of the portions of the tire 1 are determined in such a normal state, unless otherwise stated.

The term "normal rim" refers to a rim specified for each tire by the standards in a standard system including standards according to which tires are provided, and may be, for example, "standard rim" in JATMA, "design rim" in TRA, or "measuring rim" in ETRTO.

The term "normal internal pressure" refers to an air pressure specified for each tire by the standards in a standard system including standards according to which tires are provided, and may be "maximum air pressure" in JATMA, a maximum value shown in Table "tire load limits at various cold inflation pressures" in TRA, or "inflation pressure" in ETRTO.

As shown in Fig. 1, the tire 1 of the present embodiment includes a carcass 6 extending from a tread portion 2 to a bead core 5 of a bead portion 4 through a sidewall portion 3, and a belt layer 7 disposed inward of the tread portion 2 and outward of the carcass 6. The belt layer 7 of the present embodiment includes, for example, a plurality of belt plies 7A and 7B in which belt cords made of steel are obliquely arranged relative to the tire equator C.

The carcass 6 of the present embodiment includes, for example, a single carcass ply 6A. The carcass 6 may include a plurality of carcass plies 6A. Examples of the carcass ply 6A include those in which carcass cords 6c including a plurality of hybrid cords arranged in parallel are coated with topping rubber.

Each carcass cord (e.g., hybrid cord) 6c of the carcass ply 6A includes, for example, a body portion 6a and a folded portion 6b. For example, the body portion 6a extends from the tread portion 2 to the bead core 5 of the bead portion 4 through the sidewall portion 3. For example, the folded portion 6b is provided continuously with the body portion 6a and folded around the bead core 5 from the inside to the outside in the tire axial direction. Between the body portion 6a and the folded portion 6b is provided a bead apex 8 formed of a hard rubber and extending outward in the tire radial direction from the bead core 5, thereby appropriately reinforcing the bead portion 4.

The carcass cord 6c at least extends from the tread portion 2 to the bead core 5 of the bead portion 4 through the sidewall portion 3. For example, the carcass cord 6c of the present embodiment extends from an outer end 9a of one folded portion 6b to an outer end 9b of the other folded portion 6b. The carcass cord 6c is desirably arranged at an angle of 80 to 90° relative to the tire equator C. The angle of the carcass cord 6c is not limited to the range indicated above and may be smaller than 80°.

The carcass cord 6c includes at least one polymer A selected from the group consisting of an aniline-based conductive polymer, a thiophene-based conductive polymer, polyacetylene, poly(p-phenylene), and poly(p-phenylene vinylene).

Examples of the aniline-based conductive polymer as the polymer A (polymer fiber A) include compounds represented by the following formulas.

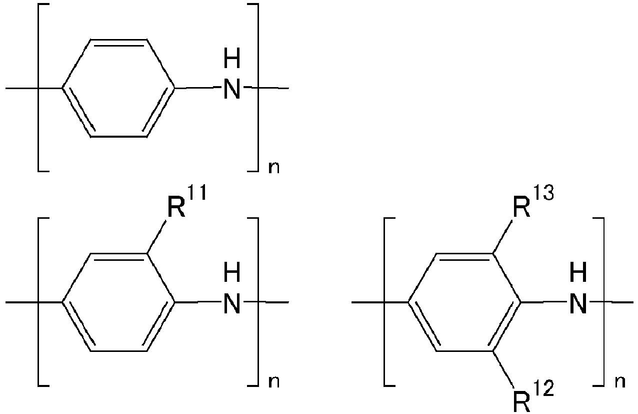

In the formulas, R¹¹, R¹², and R¹³ each independently represent a C1-C20 linear, branched, or cyclic alkyl group. The number of carbon atoms of the group is preferably 1 to 12.

Examples of the thiophene-based conductive polymer include compounds represented by the following formulas.

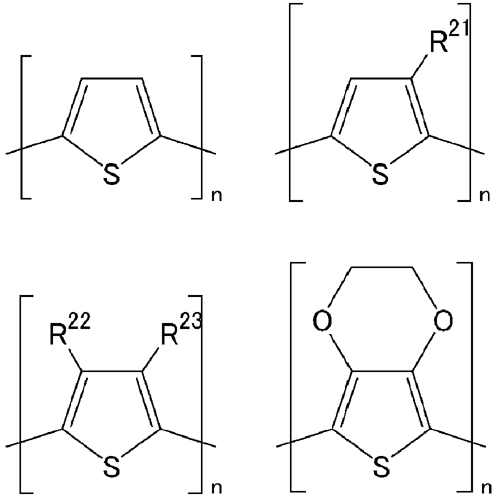

In the formulas, R²¹, R²², and R²³ each independently represent a C1-C20 linear, branched, or cyclic alkyl group. The number of carbon atoms of the group is preferably 1 to 12.

Examples of the C1-C20 alkyl groups for R¹¹, R¹², and R¹³ and R²¹, R²², and R²³ include linear, branched, or cyclic alkyl groups such as a methyl group, an ethyl group, a propyl group, an isopropyl group, a n-butyl group, an isobutyl group, a sec-butyl group, a tert-butyl group, a pentyl group, an isopentyl group, a neopentyl group, a hexyl group, a heptyl group, an octyl group, a nonyl group, a decyl group, an undecyl group, a dodecyl group, a 2-ethylhexyl group, a tetradecyl group, an octadecyl group, an icosyl group, and a cyclohexyl group.

Specific suitable examples of the aniline-based and thiophene-based conductive polymers include: polyaniline-based polymers such as polyaniline, poly(2-methylaniline), poly(2-ethylaniline), and poly(2,6-dimethylaniline); polythiophene-based polymers such as polythiophene, poly(3-methylthiophene), poly(3-ethylthiophene), poly(3,4-dimethylthiophene), poly(3,4-diethylthiophene), and poly(3,4-ethylenedioxythiophene); and derivatives of the foregoing polymers. The polyacetylene, poly(p-phenylene), or poly(p-phenylene vinylene) used as the polymer A (conductive polymer) may be, for example, a commercial product. From the standpoints of fatigue resistance, breaking strength, and conductivity, aniline-based or thiophene-based conductive polymers are preferred among these, with polyaniline or poly(3,4-ethylenedioxythiophene) being particularly suitable. These polymers A (conductive polymers) may be used alone or in combinations of two or more.

When the cord used is a cord containing at least one polymer A selected from the group consisting of an aniline-based conductive polymer and a thiophene-based conductive polymer, the electrical resistance of the tire can be reduced to greatly improve its conductivity, thereby reducing an adverse effect on the electrical system caused by buildup of static electricity in the vehicle body. Moreover, the fatigue resistance of the cord can be significantly improved. Furthermore, when the tire is equipped with an electronic device such as an RFID tag, the transmission and reception accuracy and stability can be improved and the communication distance can also be extended.

The reason for this advantageous effect is believed to be due to the following mechanism.

For example, when a conductive ply cord including an aniline-based or thiophene-based conductive polymer is used, it is believed that the cord serves as an antenna to increase the communication distance, thereby improving operability. Moreover, a first antenna, which is bonded to an RFID chip, and a second antenna, which is provided outside the first antenna, have no joints and can be electromagnetically coupled; additionally, there are no joints between the second antenna and the conductive ply cord and they can be electromagnetically coupled. Thus, although in conventional methods, the joints between antennas can be easily damaged by deformation of the running tire, it is believed that the electromagnetic coupling without joints improves the durability of the RFID tag. Furthermore, it is believed that the use of the conductive cord in a ply, which is considered as an electric energizing path, can greatly reduce the electrical resistance.

Moreover, since the cord includes an aniline-based or thiophene-based conductive polymer, i.e., an organic conductive polymer, its stretchability allows the cord to have better fatigue resistance than metal-containing cords and to be less prone to breakage. In addition, the cord can have a reduced weight as compared to metal-containing cords. Thus, it is believed that excellent cord fatigue resistance and conductivity can be provided. Moreover, it is believed that when the tire is equipped with an electronic device such as an RFID tag, good transmission and reception accuracy and stability and an extended communication distance can be provided.

The weight average molecular weight (Mw) of the polymer A (thiophene-based conductive polymer, polyacetylene, poly(p-phenylene), poly(p-phenylene vinylene)) is not limited and is usually about 500 to 1,000,000. From the standpoint of increasing the modulus of the cord to provide good handling stability to the tire, the lower limit of the Mw is preferably 1000 or more, 1200 or more, 1500 or more, 2500 or more, 10000 or more, or 15000 or more. Moreover, from the standpoint of processability, the upper limit is preferably 100000 or less, 50000 or less, 20000 or less, 15000 or less, or 10000 or less. Herein, the Mw can be determined by gel permeation chromatography (GPC) (GPC-8000 series available from Tosoh Corporation, detector: differential refractometer, column: TSKGEL SUPERMALTPORE HZ-M available from Tosoh Corporation) calibrated with polystyrene standards.

From the standpoint of mechanical properties, the lower limit of the polymer A (thiophene-based conductive polymer, polyacetylene, poly(p-phenylene), poly(p-phenylene vinylene)) content (total content) based on 100% by mass of the cord (total cord mass) is preferably 3% by mass or higher, 5% by mass or higher, 6% by mass or higher, 7% by mass or higher, 9% by mass or higher, 10% by mass or higher, 12% by mass or higher, 13% by mass or higher, 19% by mass or higher, 20% by mass or higher, 24% by mass or higher, 25% by mass or higher, 28% by mass or higher, 33% by mass or higher, or 40% by mass or higher. Moreover, from the standpoint of conductivity, the upper limit of the content is preferably 90% by mass or lower, 85% by mass or lower, 80% by mass or lower, 70% by mass or lower, 60% by mass or lower, 53% by mass or lower, 50% by mass or lower, or 40% by mass or lower.

The polymer A may be produced by any method including conventionally known methods. For example, the polymer A may be produced by a chemical polymerization method, an electrolytic polymerization method, a soluble precursor method, a matrix (template) polymerization method, or a vapor deposition method such as CVD. Moreover, the conductive polymer used may be a commercial product. The polymerization may be carried out in the presence of a dopant as described below.

To the above-described polymer A (conductive polymer) is preferably further added a dopant (electron donor) of the conductive polymer. The dopant of the conductive polymer refers to an additive for improving the conductivity of the conductive polymer, and is not limited.

Examples of usable dopants include: halide ions such as chloride ions and bromide ions; perchlorate ions; tetrafluoroborate ions; hexafluoroarsenate ions; sulfate ions; nitrate ions; thiocyanate ions; hexafluorosilicate ions; phosphate-based ions such as phosphate ions, phenylphosphate ions, and hexafluorophosphate ions; trifluoroacetate ions; tosylate ions; alkyl benzenesulfonate ions such as ethyl benzenesulfonate ions, and dodecyl benzenesulfonate ions; alkyl sulfonate ions such as methyl sulfonate ions and ethyl sulfonate ions; and polymer ions such as polyacrylate ions, polyvinyl sulfonate ions, polystyrene sulfonate ions, and poly(2-acrylamide-2-methylpropanesulfonate) ions. These may be used alone or in combinations of two or more. Preferred among these are polystyrene sulfonate ions (polystyrene sulfonates).

The amount of the dopant may be any amount that is effective for conductivity. Usually, to 100 parts by mass of the conductive polymer is preferably added 1 to 500 parts by mass, more preferably 5 to 300 parts by mass of the dopant.

The combination of the polymer A (conductive polymer) and its dopant is not limited. A preferred combination is poly(3,4-ethylenedioxythiophene) (PEDOT), which is a thiophene-based polymer, doped with poly(4-styrenesulfonate) (PSS), i.e., PEDOT/PSS. The PEDOT/PSS may be a commercial product such as Baytron P (available from Bayer, registered trademark, conductive polymer (water dispersion) obtained by polymerizing 3,4-ethylenedioxythiophene in PSS).

The cord preferably contains a blend fiber of the polymer A and another polymer B. From the standpoints of mechanical properties (e.g., strength) and conductivity, the another polymer used is preferably a polymer containing a hydroxy group (hydroxy group-containing polymer).

The cord containing the polymer A and the hydroxy group-containing polymer is excellent in fatigue resistance and conductivity. Moreover, when the tire is equipped with an electronic device such as an RFID tag, the transmission and reception accuracy and stability can be improved and the communication distance can also be extended.

The reason for this advantageous effect is believed to be due to the following mechanism.

A conductive cord prepared from an aniline-based conductive polymer (e.g., polyaniline) alone or a thiophene-based conductive polymer (e.g., poly(3,4-ethylenedioxythiophene) alone is disadvantageous in that it has low strength and poor stretchability. In contrast, it is believed that a conductive cord prepared by further blending a hydroxy group-containing polymer (e.g., polyvinyl alcohol) has improved strength and stretchability due to the hydroxy group-containing polymer which serves to connect colloidal particles (tertiary structures) of the conductive polymer. The conductive polymers have a hierarchical structure including monomer sequence (primary structure), poly-ion complex (secondary structure), colloid (tertiary structure), and aggregation (quaternary structure), and it is assumed that the interface between colloidal particles is the most likely fracture origin during stretching. Thus, it is believed that the hydroxy group-containing polymer (e.g., polyvinyl alcohol) blended acts to, for example, connect colloidal particles more strongly to prevent the colloidal particles from separating from each other, or to surround a group of colloidal particles, thereby ensuring strength and stretchability.

The hydroxy group-containing polymer may be any polymer that contains a hydroxy group in the molecule. Examples include polymers containing hydroxy group-containing units such as alcohol units of the formula (1) below, polyhydric alcohol units represented by the formula (2) below, phenolic hydroxy group units represented by the formula (3) below, aromatic alcohol units represented by the formula (4) below, and bisphenol units. Here, when the polymer is formed only of the units of formula (2) wherein y is 0, the group bonded to the carbon at the polymer terminal is a hydroxy group. Each type of these units alone may form the polymer or two or more types thereof may be combined to form the polymer. The proportion of the units of formulas (1) to (4) based on the total monomer units is preferably 80 mol% or higher, more preferably 90 mol% or higher, and may be 100 mol%.

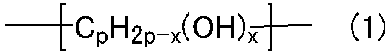

In formula (1), p represents an integer of 1 to 8, preferably an integer of 1 to 4, and x represents 1 or 2.

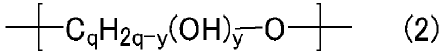

In formula (2), q represents an integer of 1 to 8, preferably an integer of 1 to 4, and y represents 0, 1, or 2.

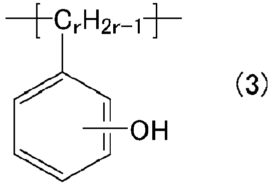

In formula (3), r represents an integer of 1 to 8, preferably an integer of 1 to 4.

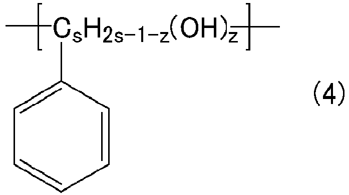

In formula (4), s represents an integer of 1 to 8, preferably an integer of 1 to 4, and z represents 1 or 2.

The units of formulas (1) to (4) may be either linear or branched units.

In particular, the hydroxy group-containing polymer preferably includes a polymer containing, as a main component, a vinyl alcohol unit of the following structural formula (I) as a monomer unit (hereinafter, also referred to as a PVA-based polymer).

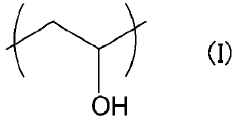

The main component herein means that the proportion of the monomer unit of formula (I) based on the total monomer units is 70 mol% or higher, preferably 80 mol% or higher, more preferably 88 mol% or higher, still more preferably 100 mol%. In an embodiment of a method for producing a polymer containing the vinyl alcohol unit as a main component, a vinyl acetate monomer is polymerized and the polymer is saponified to obtain the polymer of interest. In this case, if the unsaponified vinyl acetate monomer remains in the polymer, such a monomer is also included in the monomer unit of formula (I).

Examples of structural units other than the unit of structural formula (I) in the PVA-based polymer include: olefins such as ethylene, propylene, and butylene; acrylic acid and salts thereof, and acrylic acid esters such as methyl acrylate; methacrylic acid and salts thereof, and methacrylic acid esters such as methyl methacrylate; acrylamide and acrylamide derivatives such as N-methylacrylamide; methacrylamide and methacrylamide derivatives such as N-methylolmethacrylamide; N-vinyl amides such as N-vinylpyrrolidone, N-vinylformamide, and N-vinylacetamide; allyl ethers containing polyalkylene oxides in side chains; vinyl ethers such as methyl vinyl ether; nitriles such as acrylonitrile; vinyl halides such as vinyl chloride; unsaturated dicarboxylic acids such as maleic acid and salts thereof, anhydrides thereof, and esters thereof. Such modified units may be introduced by copolymerization or post-reaction.

The degree of saponification of the PVA-based polymer is not limited. From the standpoint of mechanical properties of the fiber to be obtained, the degree of saponification of the PVA-based polymer is preferably 80 mol% or higher, more preferably 85 to 100 mol%.

The PVA-based polymer content of the hydroxy group-containing polymer is preferably 50% by mass or higher, more preferably 75% by mass or higher, still more preferably 85% by mass or higher, and may be 100% by mass.

Specific examples of the hydroxy group-containing polymer include polyvinyl alcohol; ethylene-vinyl alcohol copolymers; polyols such as polyethylene glycol, polypropylene glycol, and polyglycerol; partial hydrolysates of polyvinyl acetate, vinyl chloride-vinyl acetate copolymers, or the like; hydroxides of polystyrene; and polysaccharides such as cellulose, and derivatives thereof.

The weight average molecular weight (Mw) of the hydroxy group-containing polymer is suitably 5,000 to 1,000,000. From the standpoint of properties such as mechanical properties of the fiber to be obtained, the lower limit of the Mw is preferably 8,000 or more, 10,000 or more, 50,000 or more, and 100,000 or more. Moreover, from the standpoint of processability, the upper limit is preferably 160,000 or less, 150,000 or less, 100,000 or less, or 50,000 or less.

When the cord contains the blend fiber of the polymer A and another polymer B, the lower limit of the another polymer content based on 100% by mass of the cord (total cord mass) from the standpoint of mechanical properties is preferably 5% by mass or higher, 10% by mass or higher, 16% by mass or higher, 20% by mass or higher, 24% by mass or higher, 25% by mass or higher, 28% by mass or higher, 40% by mass or higher, or 50% by mass or higher. Moreover, from the standpoint of conductivity, the upper limit of the content is preferably 90% by mass or lower, 85% by mass or lower, 80% by mass or lower, 75% by mass or lower, 70% by mass or lower, 68% by mass or lower, 60% by mass or lower, 53% by mass or lower, 50% by mass or lower, or 40% by mass or lower. In the case where the another polymer used is a hydroxy group-containing polymer, the hydroxy group-containing polymer content is also suitably in the range as indicated above.

From the standpoints of mechanical properties and conductivity, the mixing ratio by mass of the polymer A and its dopant (in total) to the another polymer B in the cord is preferably 1:9 to 9:1, more preferably 3:7 to 7:3, still more preferably 5:5 to 7:3, particularly preferably 5:5 to 6:4. In the case where the another polymer used is a hydroxy group-containing polymer, the ratio is also suitably in the range as indicated above.

Besides the polymer A and the blend fiber, the cord may further contain a polymer C.

The polymer C (polymer fiber C) used is preferably at least one selected from the group consisting of an aliphatic polyamide, an aromatic polyamide, a polyester, and a rayon. Conventional fibers produced from the aliphatic polyamide, aromatic polyamide, polyester, and rayon may be used.

By including a hybrid cord containing at least one polymer A selected from the group consisting of an aniline-based conductive polymer, a thiophene-based conductive polymer, polyacetylene, poly(p-phenylene), and poly(p-phenylene vinylene), and at least one polymer C selected from the group consisting of an aliphatic polyamide, an aromatic polyamide, a polyester, and a rayon, variable tensile properties (adjustment of the shape of the S-S curve) and excellent breaking strength can be obtained. The conductivity of the tire can be greatly improved, thereby reducing an adverse effect on the electrical system caused by buildup of static electricity in the vehicle body. Moreover, when the tire is equipped with an electronic device such as an RFID tag, the transmission and reception accuracy, strength, and stability can be improved.

The reason for this advantageous effect is believed to be due to the following mechanism.

For example, when a hybrid cord is formed in which blended fibers of the group of the polymer A, which is a conductive polymer, are wound spirally around a core of fibers of the group of the polymer C, it is assumed that the conductivity is dramatically enhanced while improving the low tensile strength of the conductive polymer by twisting and owing to the high tensile strength of the polymer used in the core. Thus, it is believed that excellent breaking strength and conductivity can be provided. Moreover, it is believed that when the tire is equipped with an electronic device such as an RFID tag, good transmission and reception accuracy, strength, and stability can be provided due to the excellent breaking strength and conductivity.

Examples of the aliphatic polyamide include polyamide 6 (nylon 6), polyamide 66 (nylon 66), polyamide 666 (copolymer of polyamide 6 and polyamide 66, nylon 666), polyamide 10 (nylon 10), polyamide 11 (nylon 11), and polyamide 12 (nylon 12). Examples of the aromatic polyamide (aramid) include poly(p-phenylene terephthalamide), poly(m-phenylene isophthalamide), poly(p-benzamide), poly(m-benzamide), poly(4,4'-benzanilide terephthalamide), poly(p-phenylene-4,4'-biphenylene dicarboxylic acid amide), and poly(m-phenylene-4,4'-biphenylene dicarboxylic acid amide). Examples of the polyester include polyethylene terephthalate (PET), polybutylene terephthalate (PBT), polyethylene naphthalate (PEN), polybutylene naphthalate (PBN), polyethylene isophthalate (PEI), polybutylene isophthalate (PBI), and poly(ε-caprolactone) (PCL). Examples of the rayon include cuprammonium rayon, viscose rayon, and lyocell. These may be used alone or in combinations of two or more.

The weight average molecular weight (Mw) of the polymer C is preferably 10,000 to 1,000,000. From the standpoint of properties such as mechanical properties (e.g., strength), the lower limit of the Mw is preferably 800,000 or less, 700,000 or less, or 100,000 or less. Moreover, from the standpoint of processability, the upper limit of the Mw is preferably 100,000 or less or 50,000 or less.

When the cord contains the polymer C (polymer C fiber), the polymer C content based on 100% by mass of the cord (total cord mass) from the standpoint of mechanical properties is preferably 5% by mass or higher, 10% by mass or higher, 12% by mass or higher, 14% by mass or higher, 15% by mass or higher, 19% by mass or higher, 20% by mass or higher, or 50% by mass or higher. Moreover, from the standpoint of conductivity, the upper limit of the content is preferably 80% by mass or lower, 75% by mass or lower, 70% by mass or lower, 67% by mass or lower, 60% by mass or lower, or 50% by mass or lower. In the case where the polymer C used is at least one selected from the group consisting of an aliphatic polyamide, an aromatic polyamide, a polyester, and a rayon, the total content (total amount) thereof is also suitably in the range as indicated above.

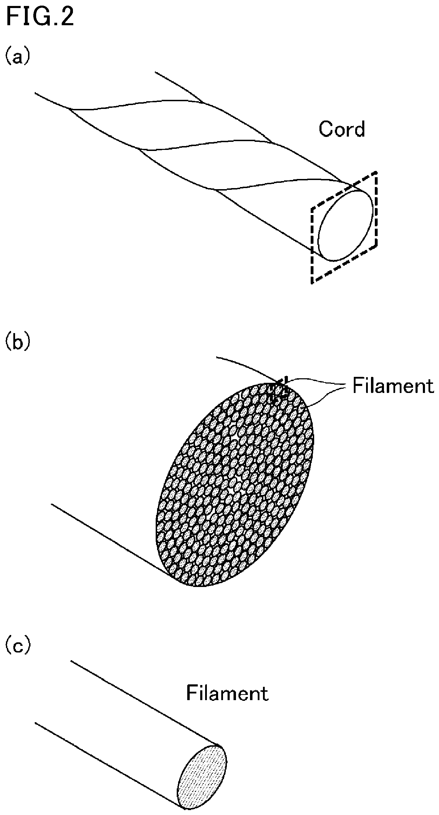

For example, the twisted cord shown in Fig. 2(a) may be suitably used as a cord structure. Fig. 2(b) is an enlarged cross-sectional view of the cord in Fig. 2(a). Fig. 2(c) is an enlarged view illustrating each filament in Fig. 2(b). Specific examples of such cord structures include: (i) a cord obtained by twisting a bundle of filaments formed only of a polymer A; and (ii) a cord obtained by twisting a bundle of blend filaments of a polymer A and a hydroxy group-containing polymer. Preferred among these is the structure (ii).

In the structure (ii), the polymer A (conductive polymer), the hydroxy group-containing polymer, and a dopant are preferably present so that they are mixed and integrated in the blend filaments. In this case, the blend filaments are twisted to form one cord shown in Fig. 2(a). Here, the term "mixed and integrated" refers to a state where the constituent materials are not in a phase-separated configuration but are intertwined with each other so that they are almost homogeneously mixed when observed by SEM or other devices. For the blend filaments of the structure (ii), the polymer A, hydroxy group-containing polymer, and dopant are almost homogeneously mixed.

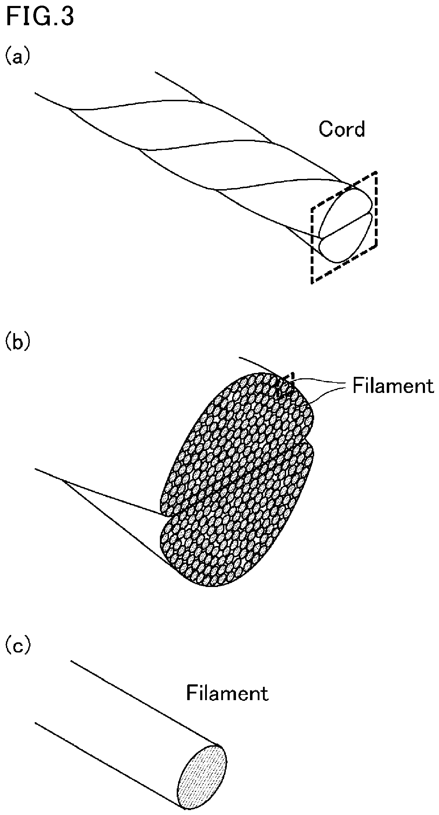

For example, the twisted cord shown in Fig. 3(a) may also be suitably used as a cord structure. Fig. 3(b) is an enlarged cross-sectional view of the cord in Fig. 3(a). Fig. 3(c) is an enlarged view illustrating each filament in Fig. 3(b). Specific examples of such cord structures include: (i) a cord obtained by twisting a bundle of filaments formed only of a polymer A and a bundle of filaments formed only of a polymer C; and (ii) a cord obtained by twisting a bundle of blend filaments of a polymer A and a hydroxy group-containing polymer and a bundle of filaments formed only of a polymer C. Preferred among these is the structure (ii).

In the structure (ii), preferably, the polymer A (conductive polymer), the hydroxy group-containing polymer, and a dopant are present so that they are mixed and integrated in the blend filaments (filaments A), and the polymer C is present in the form of filaments formed only of the polymer C (filaments C). In this case, the blend filaments (filaments A) and the filaments C are twisted together to form one cord shown in Fig. 3(a). Here, the term "mixed and integrated" refers to a state where the constituent materials are not in a phase-separated configuration but are intertwined with each other so that they are almost homogeneously mixed when observed by SEM or other devices. For the blend filaments (filaments A) of the structure (ii), the polymer A, hydroxy group-containing polymer, and dopant are almost homogeneously mixed.

The filaments formed of the polymer A (conductive polymer) or the blend filaments formed of the polymer A, hydroxy group-containing polymer, and dopant may have any conductive filament diameter (diameter of the filament containing the conductive polymer). For example, a filament having a diameter of 1 to 1000 µm, preferably 20 to 200 µm can be widely used. The conductive filament diameter can be appropriately adjusted by varying the spinning nozzle diameter or the draw ratio. The conductive filament diameter can be measured with an electron microscope or other devices.

In view of practical suitability, the cord preferably has a volume specific resistance of 1 × 10⁻⁴ to 1 × 10⁴ Ω·cm, more preferably 1 × 10⁻³ to 1 × 10¹ Ω·cm.

The cord may have any fiber diameter. For example, a fiber having a diameter of 1 to 1000 µm, preferably 20 to 500 µm, more preferably 20 to 200 µm, can be widely used. The fiber diameter can be appropriately adjusted by varying the spinning nozzle diameter or the draw ratio. The fiber diameter can be measured with an electron microscope or other devices.

From the standpoints of mechanical properties and of preventing yarn breakage during operation, the load at 4% elongation of the cord is preferably 50 MPa or more, more preferably 60 MPa or more. The upper limit is not limited but is usually 150 MPa or less. The load at 4% elongation can be measured in accordance with JIS L1017 (2002) "Test methods for chemical fibre tire cords".

From the standpoint of weight reduction, the specific gravity (g/cm³) of the cord is preferably 1.50 or less, 1.40 or less, 1.30 or less, or 1.21 or less. The lower limit is not limited, but is usually 1.00 or more and may be 1.21 or more or 1.30 or more.

The specific gravity can be measured in accordance with JIS Z8807 (2012) "Methods of measuring density and specific gravity of solid".

From the standpoints of mechanical properties and of preventing yarn breakage during operation, the tensile strength (breaking strength) of the cord is preferably 50 MPa or more, more preferably 60 MPa or more. The upper limit is not limited but is usually 150 MPa or less. The tensile strength can be measured in accordance with JIS L1015 (1999) "Test methods for man-made staple fibres".

The specific resistance, load at 4% elongation, specific gravity, and tensile strength (breaking strength) of the cord can be appropriately controlled by varying the amounts of the polymer A and its dopant, another polymer B, and polymer C or conditions related to spinning such as spinning and drawing conditions.

The cord may contain additives including, for example, carbon materials such as carbon nanotubes, pigments, colorants, antioxidants, antifreezing agents, pH adjusters, masking agents, colorants, oil agents, flame retardants, and special function agents, within a range that the properties of the cord are not impaired.

The cord can be produced by known methods. In an exemplary known method, a conductive polymer fiber (e.g., blend fiber) is produced from a polymer A and a dopant of the polymer A, and optionally another polymer B such as a hydroxy group-containing polymer, and separately a polymer C fiber is optionally produced from a polymer C, followed by using the conductive polymer fiber and optionally the polymer C fiber to produce a cord containing the conductive polymer fiber and optionally the polymer C fiber.

In the carcass ply 6A, from the standpoints of conductivity and breaking strength, the endcount (the number of cords per unit ply width) of the conductive polymer fiber (the fiber formed of a polymer A and its dopant, and optionally another polymer B such as a hydroxy group-containing polymer) is preferably, for example, 0.1 to 10 ends, more preferably 0.2 to 5 ends per 10 cm width of the ply. Moreover, the endcount is also suitably 0.1 to 10 ends or 0.2 to 5 ends per 5 cm width of the ply.

A radio tag that includes a sensor for detecting the internal state of the tire such as tire air pressure, a portion for recording unique identification information or the like of the tire, or other portions may be attached directly to the inside surface of the tire, or embedded inside the tire, to determine the conditions of the running tire or utilize various tire information acquired from the radio tag for maintenance service or other purposes.

The radio tag is preferably an RFID tag. For example, an RFID tag may be suitably used which includes at least one selected from (i) a sensor portion for detecting the internal state of the tire such as tire internal temperature or tire internal pressure; (ii) a portion for recording tire unique identification information capable of identifying each individual tire, such as the manufacturer, manufacturing plant, or manufacturing date of the tire; and (iii) a portion for rewritably recording tire history information such as the running distance, number of sudden braking events, number of sudden acceleration events, and/or number of sudden turning events of the tire, and which further includes a signal transmission portion for transmitting a signal from the sensor and/or recording portion so that it can be received by an antenna mounted on the vehicle side.

By including the sensor portion in an RFID tag, it is possible to successively detect the internal state such as internal temperature or internal pressure of the tire. By transmitting a signal from the sensor portion to the vehicle side via the signal transmission portion, the results detected in the sensor portion can be utilized for vehicle control or other purposes. It is to be noted that such a sensor portion may be provided in the form of an IC chip or the like and housed in a housing portion provided separately from an RFID tag for tire identification.

By including the recording portion in an RFID tag, it is possible to write tire-related information which cannot be recognized from the tire unique identification information into the recording portion. Moreover, the written information may be read out in a reading/writing device (R/W device) mounted on the vehicle side via the signal transmission portion to acquire various tire-related information, which can sophisticate tire maintenance service or other service.

Moreover, when the tire of the present disclosure is equipped with such a radio tag, good transmission and reception accuracy and stability can be obtained and the communication distance can also be extended.

The tire of the present disclosure can be produced by usual methods. The radio tag can also be installed at a conventional site in a conventional manner. Examples of the tire include pneumatic tires and airless (solid) tires. Preferred among these are pneumatic tires. The tire may be used as a tire for passenger vehicles, large passenger vehicles, large SUVs, heavy duty vehicles such as trucks and buses, light trucks, or motorcycles, or as a racing tire (high performance tire), for example. The tire can also be used as an all-season tire, summer tire, or studless winter tire (winter tire), for example.

### EXAMPLES

The present disclosure is specifically described with reference to, but not limited to, examples.

Prototype pneumatic tires (size: 195/60R16) having a basic structure shown in Fig. 1 are prepared based on the specifications (carcass cord specifications) in Tables 1-1 and 1-2 as described below.

### (Spinning step)

The material fibers are wound as filaments in the weight ratio shown in the table to obtain a long fiber cord. The filament diameter or fiber diameter in the tables indicates the diameter of the filament or fiber alone which contains a conductive polymer.

### (Twisting step)

The cords obtained in the spinning step are each aligned in twos and primarily twisted in the Z direction under the conditions shown in the table using a ring twisting machine to obtain primarily twisted yarn cords. Then, the twisted yarn cords are combined and finally twisted in the S direction to obtain twisted yarn cords. The twisted yarn cords are immersed in a first adhesive treatment solution mainly containing an epoxy compound, and heat-treated at 140°C for two minutes to remove moisture, followed by heat treatment at 230°C for one minute. The twisted yarn cords are further immersed in a second adhesive treatment solution mainly containing resorcinol-formalin-rubber latex (RFL), and heat-treated at 140° C for two minutes to remove moisture, followed by heat treatment at 230°C for one minute to obtain adhesive-imparted twisted yarn cords. Here, the winding and twisting steps are appropriately adjusted so that the resulting cords each have a diameter of 1.0 mm.

### (Topping step and material preparing step)

According to the table, the twisted yarn cords obtained in the twisting step and PET fiber cords (φ 1.0 mm) are arranged in quantities of 100 cords in a 10 cm-wide area, and rubber is pressure-bonded to the upper and lower surfaces of the arranged cords to a thickness of 1.5 mm. Thus, a carcass material is obtained. The carcass material is cut to a predetermined length and joined together so that the fiber direction faces the tire radial direction to form a carcass. Here, the number of conductive cords introduced in the 10 cm-wide area is as indicated in the table.

For the metal fibers used in the comparative examples, the spinning and twisting steps are not involved, and short fibers of the diameters shown in the tables as conductive cords are topped with rubber.

The common specifications of the tires are as follows.
Rim: 18 × 7.0
Tire internal pressure: 240 kPa
Carcass specification: one carcass ply (each carcass cord arranged at 90° relative to the tire equator)
Material of carcass cord: cords shown in Tables 1-1 and 1-2

### (Material)

PEDOT (1A-1)/PSS: Clevios^{™} PAG available from H. C. Starck (blend (fiber) of poly(3,4-ethylenedioxythiophene) and poly(4-styrenesulfonate), Mw of PEDOT (1A-1): 1500)
PEDOT (1A-2)/PSS: product of Sigma-Aldrich (blend (fiber) of poly(3,4-ethylenedioxythiophene) and poly(4-styrenesulfonate), Mw of PEDOT (1A-2): 2500)
Polyaniline fiber (1A-3): product of Sigma-Aldrich (Mw 20000)
Polyaniline fiber (1A-4): product of Fujifilm Wako Pure Chemical Corporation (Mw 15000)
PVA (1B-1): product of Kuraray Co., Ltd. (polyvinyl alcohol,
Mw: 150000, degree of saponification: 99.9 mol%)
PET fiber (1C-1): product of KORDSA (Mw 800000)

The following evaluations are performed on each tire or cord. Table 1 shows the results.

### <Cord fatigue resistance>

Using a disk fatigue tester, each carcass cord coated with a rubber compound is subjected to 1.0% elongation and 6.0% compression at 80°C at 2500 rpm for 100 hours, and the rate of decrease in cord breaking strength before and after the treatment is measured. The breaking strength is measured in accordance with JIS L1015 (1999) using a tensile tester AGS-X (available from Shimadzu Corporation) at a grip distance of 250 mm and a tensile rate of 300 mm/min to determine breaking strength (tensile strength). The rate of decrease of each cord is expressed as an index relative to the rate of decrease of Comparative Example 1-1 set equal to 100. A higher index indicates better cord fatigue resistance.

### <Electrical resistance (Tire conductivity)>

The volume specific resistance (Ω·cm) between the base pen position exposed on the tread surface and the bead portion at the point closest thereto is measured using a Digital Megohm HiTester (available from Hioki E.E. Corporation). The reciprocal of the volume specific resistance (Ω·cm) of each tire is expressed as an index relative to the reciprocal of the volume specific resistance (Ω·cm) of Comparative Example 1-1 set equal to 100. A higher index indicates better tire conductivity.

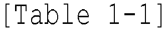

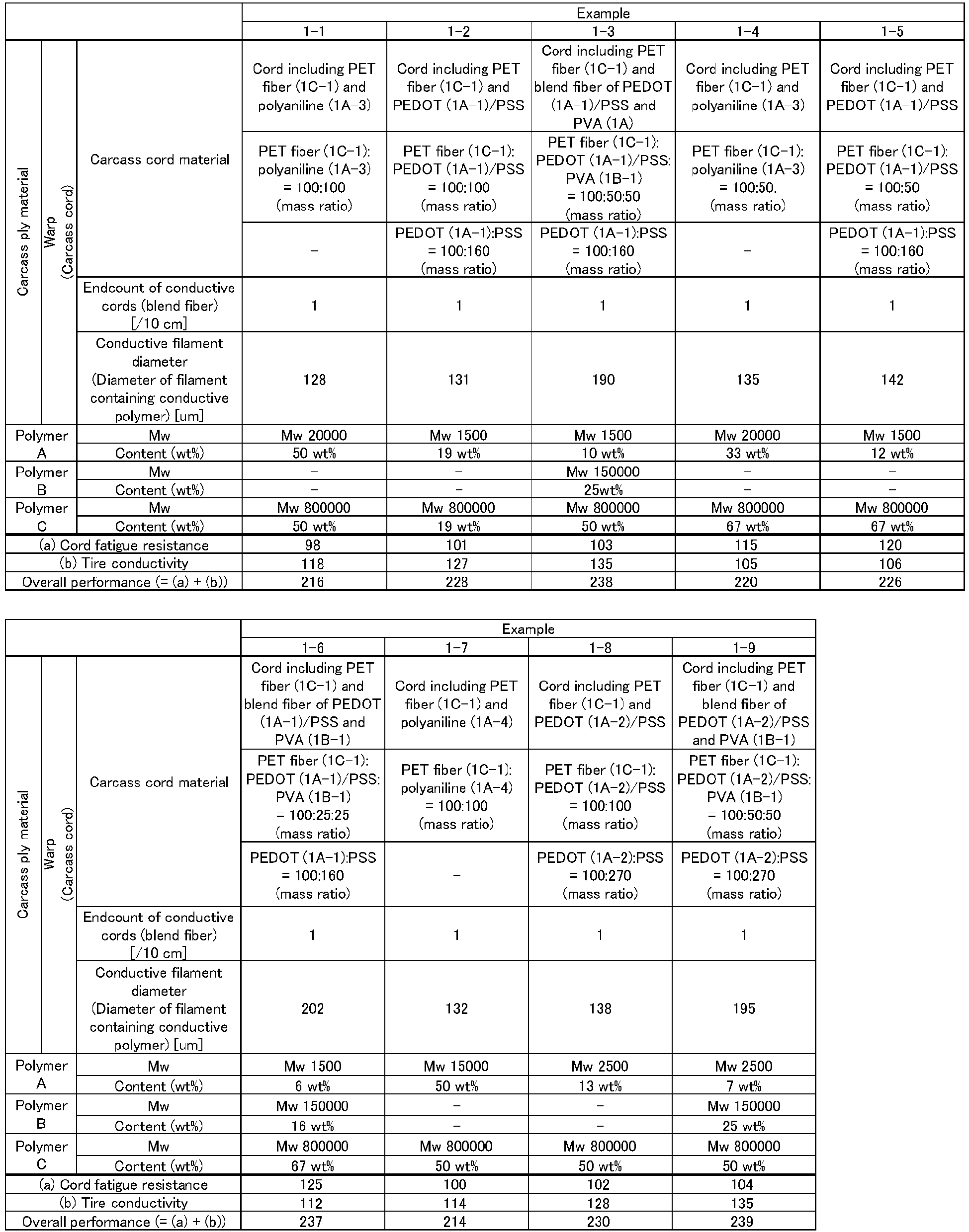

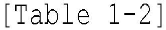

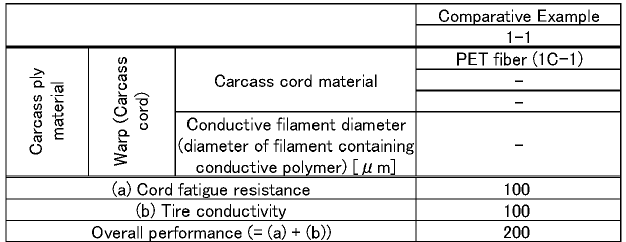

As shown in Tables 1-1 and 1-2, the examples in which a cord containing an aniline-based or thiophene-based conductive polymer is used are expected to be excellent in overall performance in terms of cord fatigue resistance and tire conductivity. It is also expected that when such a tire excellent in the overall performance is equipped with a radio tag such as an RFID tag, good transmission and reception accuracy and stability can be obtained and the communication distance can also be extended.

Prototype pneumatic tires (size: 195/60R16) having a basic structure shown in Fig. 1 are prepared based on the specifications (carcass cord specifications) in Tables 2-1 and 2-2 as described above.

The common specifications of the tires are as follows.
Rim: 18 × 7.0
Tire internal pressure: 240 kPa
Carcass specification: one carcass ply (each carcass cord arranged at 90° relative to the tire equator)
Material of carcass cord: cords shown in Tables 2-1 and 2-2

### (Material)

PEDOT (2A-1)/PSS: Clevios available from Starck (blend (fiber) of poly(3,4-ethylenedioxythiophene) and poly(4-styrenesulfonate), Mw of PEDOT (2A-1): 100000)
PEDOT (2A-2)/PSS: PEDOT/PSS aqueous solution available from Sigma-Aldrich (blend (fiber) of poly(3,4-ethylenedioxythiophene) and poly(4-styrenesulfonate), Mw of PEDOT (2A-2): 100000)
Polyaniline fiber (2A-3): Polyaniline (emeraldine salt) available from Sigma-Aldrich (Mw 10000)
Polyaniline fiber (2A-4): Polyaniline available from Idemitsu Kosan Co., Ltd. (Mw 10000)
PVA (2B-1): PVA available from Kuraray Co., Ltd. (polyvinyl alcohol, Mw: 160000, degree of saponification: 99.9 mol%)
PVA (2B-2): PVOH available from The Nippon Synthetic Chemical Industry Co., Ltd. (polyvinyl alcohol, Mw: 8000, degree of saponification: 99 mol%)
PET fiber: product of KORDSA (Mw 800000)
Nylon fiber: product of Asahi Kasei Corporation (Mw 700000)
Metal cord: product of Shandong SNTON Steel Cord Co., Ltd.

The following evaluations are performed on each tire or cord. Tables 2-1 and 2-2 show the results.

### <Volume specific resistance (cord)>

The volume specific resistance (Ω·cm) is measured for each carcass cord (hybrid cord) using a Digital Megohm HiTester (available from Hioki E.E. Corporation). A cross-sectional area of each carcass cord is observed with a microscope (VHX-1000 available from Keyence Corporation) to calculate the volume specific resistance (Ω·cm).

### <Load at 4% elongation (cord)>

The load (MPa) at 4% elongation is measured for each cord in accordance with JIS L1017 (2002). A larger value indicates better cord fatigue resistance.

### <Volume specific resistance (tire)>

The volume specific resistance (Ω·cm) of each tire is measured in accordance with JIS C2139 (2008) (resistance between the base pen position exposed on the tread surface and the bead portion at the point closest thereto). A smaller value indicates better tire conductivity.

### <Specific gravity (cord)>

The specific gravity of each cord is measured in accordance with JIS Z8807 (2012). A smaller value indicates greater contribution to weight reduction.

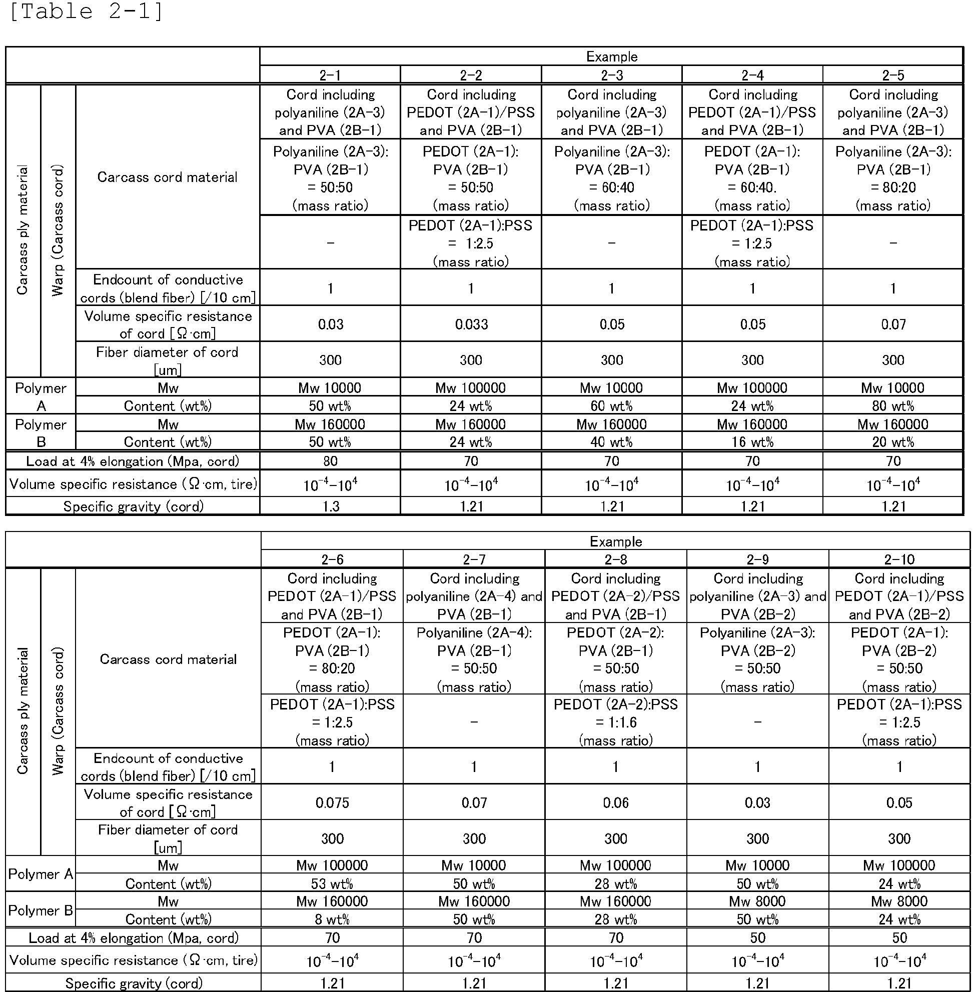

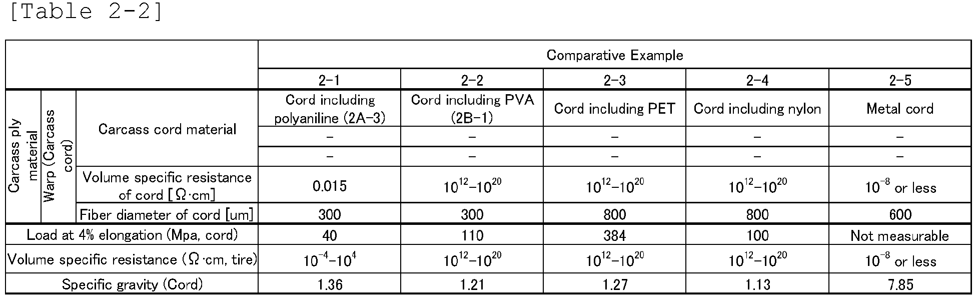

As shown in Tables 2-1 and 2-2, the examples in which a cord containing an aniline-based or thiophene-based conductive polymer is used are expected to be excellent in overall performance in terms of cord fatigue resistance and tire conductivity. It is also expected that when such a tire excellent in the overall performance is equipped with a radio tag such as an RFID tag, good transmission and reception accuracy and stability can be obtained and the communication distance can also be extended.

Prototype pneumatic tires (size: 195/60R16) having a basic structure shown in Fig. 1 are prepared based on the specifications (carcass cord (hybrid cord) specifications) in Tables 3-1 and 3-2 as described above.

The common specifications of the tires are as follows.
Rim: 18 × 7.0
Tire internal pressure: 240 kPa
Carcass specification: one carcass ply (each carcass cord arranged at 90° relative to the tire equator)
Material of carcass cord: hybrid cords shown in Tables 3-1 and 3-2

### (Material)

PEDOT (3A-1)/PSS: product of Nagase ChemteX Corporation (blend (fiber) of poly(3,4-ethylenedioxythiophene) and poly(4-styrenesulfonate), Mw of PEDOT (3A-1): 2500)
PEDOT (3A-2)/PSS: Clevios^{™} PAG available from H. C. STARCK (blend (fiber) of poly(3,4-ethylenedioxythiophene) and poly(4-styrenesulfonate), Mw of PEDOT (3A-2): 1500) Polyaniline fiber (3A-3): product of Sigma-Aldrich (Mw 20000)
Polyacetylene fiber (3A-4): Mw 35000
Poly(p-phenylene) fiber (3A-5): Mw 10000
Poly(p-phenylene vinylene) fiber (3A-6): Mw 10000
PET fiber (3C-1): product of Toray Industries, Inc. (Mw 30000)
Aramid fiber (3C-2): product of Du Pont-Toray Co., Ltd. (Mw 25000)
Nylon fiber (3C-3): product of Asahi Kasei Corporation (Mw 25000)
Rayon fiber (3C-4): product of Ayaha Corporation (Mw 25000) PVA (3B-1): PVA available from Kuraray Co., Ltd. (polyvinyl alcohol, Mw: 150000, degree of saponification: 99.9 mol%)

The following evaluations are performed on each tire or cord. Tables 3-1 and 3-2 show the results.

### <Volume specific resistance (hybrid cord)>

The volume specific resistance (Ω·cm) is measured for each carcass cord (hybrid cord) using a Digital Megohm HiTester (available from Hioki E.E. Corporation). A cross-sectional area of each carcass cord is observed with a microscope (VHX-1000 available from Keyence Corporation) to calculate the volume resistance (Ω·cm).

### <Volume specific resistance (tire conductivity)>

The volume specific resistance (Ω·cm) between the base pen position exposed on the tread surface and the bead portion at the point closest thereto is measured using a Digital Megohm HiTester (available from Hioki E.E. Corporation). The reciprocal of the volume specific resistance (Ω·cm) of each tire is expressed as an index relative to the reciprocal of the volume specific resistance (Ω·cm) of Comparative Example 3-1 set equal to 100. A higher index indicates better tire conductivity.

### <Breaking strength>

The breaking strength (tensile strength) of each carcass cord (hybrid cord) is measured in accordance with JIS L1015 (1999) using s tensile tester AGS-X (available from Shimadzu Corporation) at a grip distance of 250 mm and a tensile rate of 300 mm/min. The measured breaking strength is converted to the breaking strength of each ply material (1.0 m × 1.0 m) and expressed as an index relative to the breaking strength of Comparative Example 3-1 set equal to 100. A higher index indicates better cord breaking strength. An index of 95 or higher means that no practical problem will arise.

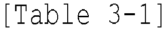

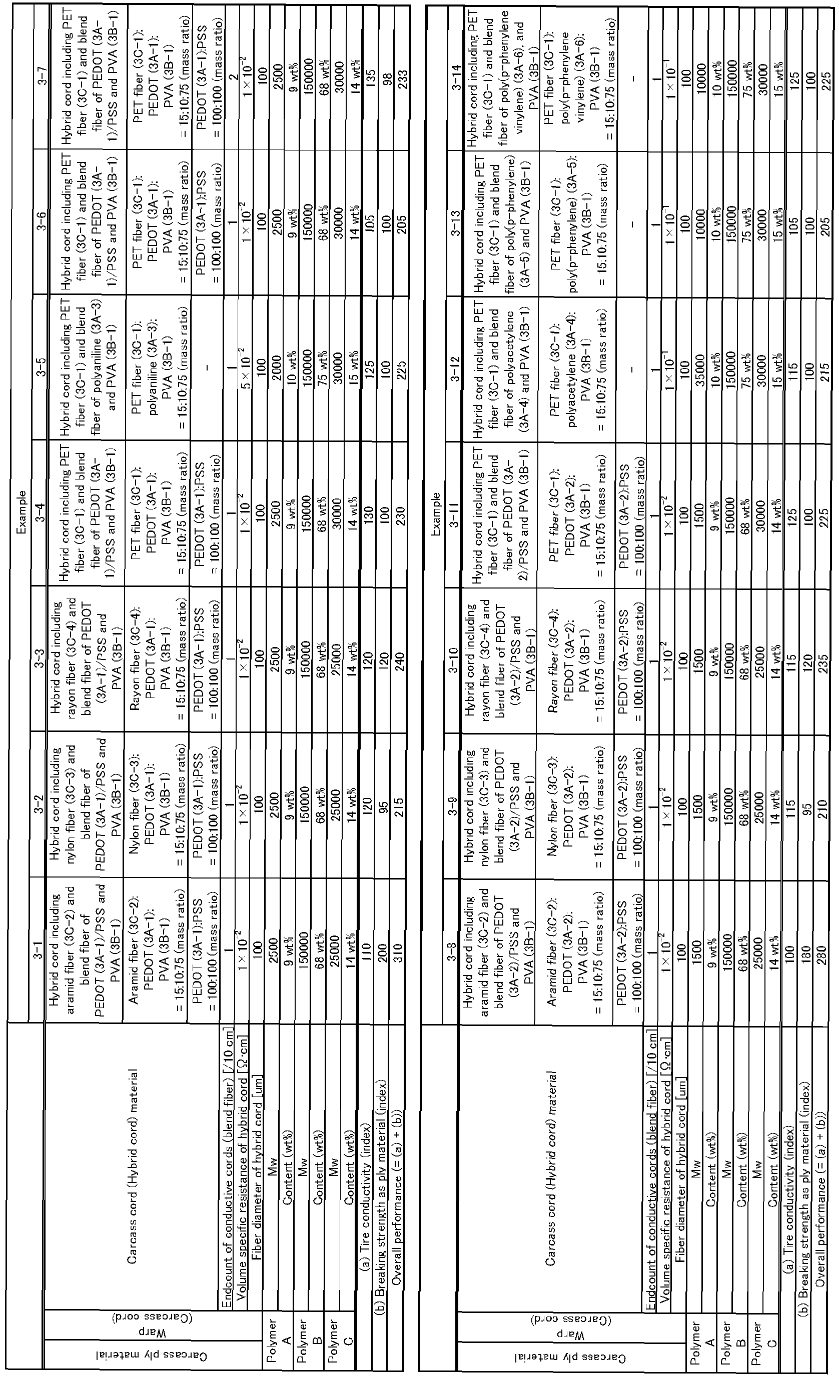

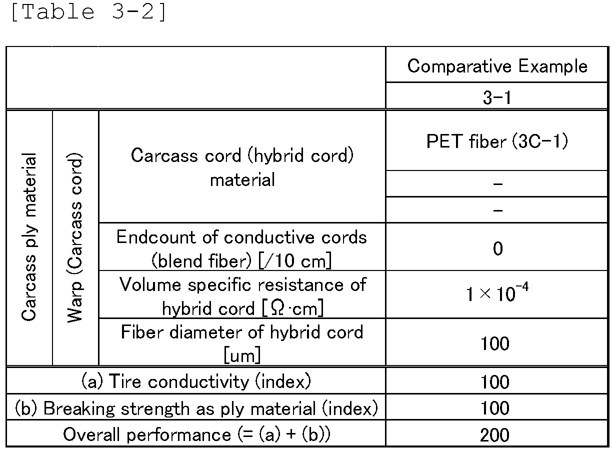

As shown in Tables 3-1 and 3-2, the examples in which a hybrid cord containing a polymer A such as an aniline-based conductive polymer and a polymer B such as an aliphatic polyamide is used are expected to be excellent in breaking strength and conductivity. It is also expected that when such a tire excellent in breaking strength and conductivity is equipped with a radio tag such as an RFID tag, good transmission and reception accuracy and stability can be obtained and the communication distance can also be extended.

### REFERENCE SIGNS LIST

1: pneumatic tire
2: tread portion
3: sidewall portion
4: bead portion
5: bead core
6: carcass
6A: carcass ply
6a: body portion
6b: folded portion
6c: carcass cord
7: belt layer
7A, 7B: belt ply
8: bead apex
9a: outer end of one folded portion 6b
9b: outer end of the other folded portion 6b
C: tire equator

## Claims

1. A cord, comprising at least one polymer A selected from the group consisting of an aniline-based conductive polymer, a thiophene-based conductive polymer, polyacetylene, poly(p-phenylene), and poly(p-phenylene vinylene).

2. The cord according to claim 1,
wherein the cord comprises a blend fiber of the polymer A and another polymer B.

3. The cord according to claim 2,
wherein the another polymer B is a hydroxy group-containing polymer.

4. The cord according to claim 3,
wherein the aniline-based conductive polymer is polyaniline, the thiophene-based conductive polymer is poly(3,4-ethylenedioxythiophene), and the hydroxy group-containing polymer is polyvinyl alcohol.

5. The cord according to any one of claims 1 to 4,
wherein the cord is a hybrid cord comprising the polymer A and at least one polymer C selected from the group consisting of an aliphatic polyamide, an aromatic polyamide, a polyester, and a rayon.

6. A tire, comprising the cord comprising at least one polymer A according to any one of claims 1 to 5.

7. The tire according to any one of claims 1 to 6,
wherein the cord is used as a carcass cord.

8. The tire according to any one of claims 1 to 7, comprising an RFID tag.

## Amended claims

### Amended claims under Art. 19.1 PCT

**1.** A carcass cord, comprising at least one polymer A selected from the group consisting of an aniline-based conductive polymer, a thiophene-based conductive polymer, polyacetylene, poly(p-phenylene), and poly(p-phenylene vinylene).

**2.** The carcass cord according to claim 1,
wherein the carcass cord comprises a blend fiber of the polymer A and another polymer B.

**3.** The carcass cord according to claim 2,
wherein the another polymer B is a hydroxy group-containing polymer.

**4.** The carcass cord according to claim 3,
wherein the aniline-based conductive polymer is polyaniline, the thiophene-based conductive polymer is poly(3,4-ethylenedioxythiophene), and the hydroxy group-containing polymer is polyvinyl alcohol.

**5.** The carcass cord according to any one of claims 1 to 4,
wherein the carcass cord is a hybrid cord comprising the polymer A and at least one polymer C selected from the group consisting of an aliphatic polyamide, an aromatic polyamide, a polyester, and a rayon.

**6.** A tire, comprising the carcass cord according to any one of claims 1 to 5.

**8.** The tire according to claim 6, comprising an RFID tag.

Statement under Art. 19.1 PCT
Claims 1-6: These claims have been amended on the basis of original claim 7.

Claim 7: This claim is cancelled.

Claim 8: This claim has been amended to change its dependency as a result of the cancellation of claim 7.
